# FASCICULE DE BREVET EUROPEEN

(11) **EP 3 397 888 B1**
(45) Date de publication et mention de la délivrance du brevet: **18.08.2021**
(21) Numéro de dépôt: 16829427.0
(22) Date de dépôt: 29.12.2016
(51) Int. Cl.: F16L 41/00, F17D 3/18, G01F 1/38

(54) **DISPOSITIF ÉLECTRONIQUE DESTINÉ À ÊTRE INSÉRÉ DANS UNE CANALISATION, ET PROCÉDÉ D'INSTALLATION DU DISPOSITIF**
ELEKTRONISCHE VORRICHTUNG ZUR EINFÜHRUNG IN EIN ROHR UND VERFAHREN ZUR INSTALLATION DER VORRICHTUNG
ELECTRONIC DEVICE INTENDED FOR BEING INSERTED INTO A PIPE, AND METHOD FOR INSTALLING THE DEVICE

(30) Priorité: 31.12.2015 FR 1563505
(43) Date de publication de la demande: 07.11.2018
(73) Titulaire: Engie, 92400 Courbevoie (FR)
(72) Inventeur: GORINTIN, Louis, 92120 Montrouge (FR); OUDWAN, Maher, 75011 Paris (FR); BIDEAULT, Jean-Michel, 35480 Guipry (FR)
(74) Mandataire: Cabinet Beau de Loménie
(86) Numéro de dépôt international: PCT/FR2016/053681
(87) Numéro de publication internationale: WO 2017/115054

(56) Documents cités:
- DE-A1- 3 524 219
- DE-A1- 10 114 648
- FR-A- 1 591 769
- FR-A1- 2 417 052
- FR-A1- 2 692 334

## Description

### Arrière-plan de l'invention

L'invention se rapporte au domaine général de la distribution des fluides, et elle concerne tout particulièrement l'installation de dispositifs électroniques dans les canalisations dans lesquelles du gaz naturel circule.

L'invention trouve notamment application dans l'installation de dispositifs électroniques dans des canalisations en polyéthylène ou en polychlorure de vinyle (PVC), ou dans tout autre matière plastique adaptée pour la circulation de fluides.

De nouvelles sources d'énergie plus propres et renouvelables sont maintenant disponibles. Le biométhane fait partie de ces sources d'énergie. Le biométhane est obtenu par fermentation de déchets agricoles, ménagers, industriels ou encore des boues de stations d'épuration. Le biométhane peut être épuré jusqu'à obtenir une qualité correspondant aux propriétés l'autorisant à être injecté sur un réseau de gaz naturel. Plus précisément, ce gaz est odorisé, contrôlé, et sa pression est régulée pour ensuite être injecté dans un réseau de distribution de gaz naturel pour son acheminement jusqu'aux consommateurs. Alors que traditionnellement, la distribution du gaz naturel se fait dans une structure arborescente descendante, la distribution de gaz naturel doit maintenant se faire dans une structure maillée du fait de la multiplication des points de distribution de biométhane.

Dans une telle structure maillée, il est particulièrement important de savoir comment circule les gaz, notamment pour adapter les besoins de production en fonction de la consommation. Cette connaissance des flux peut être obtenue en mesurant, en de nombreux points de mesure, la pression, le débit, et des paramètres physico-chimiques du gaz naturel. Pour obtenir une connaissance des flux précise, il est nécessaire d'utiliser un nombre élevé de points de mesure. Cela conduit à une bonne connaissance de la qualité du gaz, de sa pression, et de l'intégrité de la structure. Cela permet également de bien piloter les organes de la structure et d'optimiser ensuite la facturation auprès des clients qui reçoivent le gaz.

On installe traditionnellement des capteurs (par exemple de pression ou de débit) dans des canalisations ou à des postes dits de détente. Cela étant, les endroits où l'on souhaite effectuer des mesures ne sont pas toujours accessibles pour y mettre en œuvre des travaux pour l'installation de capteurs.

Ces inconvénients techniques ont un impact sur le coût et la durée des interventions dans lesquelles on installe les capteurs.

Un autre inconvénient des techniques connues concerne la nécessité de couper la circulation de gaz dans les canalisations pendant les interventions.

Dans une première méthode d'intervention connue, on perce une canalisation dans laquelle circule du gaz en utilisant un sas d'isolation ou un appareil permettant de percer une canalisation dans laquelle circule un gaz, et ensuite on introduit un système électronique tel qu'un capteur dans la canalisation.

Dans une deuxième méthode d'intervention connue, on introduit le système électronique au moyen d'une sonde.

Ces méthodes connues présentent les inconvénients suivants :
- les travaux d'installation peuvent nécessiter une coupure de la circulation de gaz ou au moins une baisse de la pression dans la canalisation,
- les systèmes électroniques traditionnels sont très encombrants (par exemple entre 1 mètre et 1,5 mètre de haut), ce qui les rend installables que dans des endroits suffisamment accessibles,
- les systèmes électroniques traditionnels nécessitent une alimentation électrique externe : cela implique que les mesures ne peuvent être faites qu'à proximité d'une source d'alimentation compatible avec la directive européenne bien connue de l'homme du métier « ATEX »,
- les systèmes électroniques traditionnels communiquent les informations récupérées (s'il s'agit de capteurs) par des réseaux filaires,
- le coût des systèmes électroniques traditionnel est trop élevé, et tel est également le cas des coûts liés à l'installation de ces systèmes : cela empêche l'installation de nombreux capteurs.

On peut noter que pour qu'un système électronique installé dans une canalisation ne perturbe pas la circulation du fluide, cette installation doit se faire dans une canalisation rectiligne entre deux extrémités en un point spécifique. Ce point est choisi pour que le rapport entre les distances entre les deux extrémités et le point soit contrôlé (ce rapport dépend du diamètre de la canalisation). Cette contrainte limite encore plus les possibilités d'installation d'un système selon la technique antérieure.

De l'état de la technique antérieure, on connait le document DE 3524219) qui décrit un dispositif à capteur qui s'insère dans une canalisation.

L'invention vise notamment à pallier certains de ces inconvénients, et elle vise en particulier l'obtention d'un dispositif peu volumineux, facile à installer, et pouvant être inséré dans une canalisation dans laquelle circule un fluide.

### Objet et résumé de l'invention

La présente invention répond à ce besoin en proposant un un système comprenant un dispositif électronique destiné à être inséré dans une canalisation jusqu'à une position finale, le dispositif étant en outre configuré pour être agencé, préalablement à ladite insertion dans ladite position finale, dans un manchon assemblé à la canalisation et à travers une conduite du manchon débouchant sur une paroi de la canalisation, le dispositif comprenant :
- un corps muni d'une portion filetée destinée à coopérer avec une portion filetée de la conduite du manchon pour déplacer le dispositif électronique par vissage jusqu'à sa position finale,
- un emporte-pièce configuré pour former un orifice traversant dans la canalisation au cours dudit vissage et permettre l'insertion du dispositif électronique dans la canalisation jusqu'à sa position finale,
- un module électronique disposé entre l'emporte-pièce et ledit corps et destiné à être en contact avec un fluide traversant la canalisation dans ladite position finale,
- au moins une connexion électrique connectée au module électronique et traversant ledit corps débouchant sur une face supérieure du corps située à l'opposée dudit module électronique et dudit emporte-pièce par rapport audit corps,
le corps et ladite au moins une connexion électrique formant un bouchon de la conduite du manchor, le système comportant en outre ledit manchon comprenant la conduite dans laquelle le dispositif est agencé, la conduite comprenant la portion filetée coopérant avec la portion filetée du corps du dispositif.

Ainsi, l'invention propose un dispositif permettant une insertion et le percement de la canalisation simultanés et mis en œuvre en maintenant une bonne étanchéité. Il n'y a donc pas obligatoirement d'utilisation d'un sas pour maintenir l'étanchéité, et il n'y a pas non plus de percement et d'insertion en deux étapes distinctes.

Cela résulte de la structure du dispositif qui comporte à la fois un emporte-pièce et une portion filetée qui va coopérer avec celle de la conduite du manchon pour maintenir une étanchéité. L'utilisation de la portion filetée et d'un corps qui est plein permet d'obtenir une bonne étanchéité pour des gammes de pression que l'homme du métier saura déterminer. Pour certaines applications, l'étanchéité pourra être obtenue par non seulement la coopération des portions filetées, mais également par l'utilisation d'un sas, comme cela sera décrit ci-après.

L'installation du dispositif tel que défini ci-avant est donc particulièrement facile, puisque cette installation peut être faite dès lors que la canalisation est accessible et qu'un manchon peut être assemblé sur une canalisation, avec une conduite qui a une ouverture qui débouche sur une paroi (la périphérie de cette ouverture étant assemblée de manière étanche à la paroi).

On peut noter que par formant un bouchon, on entend que le corps dans lequel sont noyé les connexions électriques ne laissent pas passer de gaz dans la conduite du manchon et forment un ensemble étanche au moyen des portions filetées qui coopèrent.

L'emporte-pièce est destiné à percer un orifice lorsque le dispositif se déplace vers la canalisation. Il en découle que l'invention s'applique pour les canalisations formées par des matériaux pouvant être percé de cette manière. Tel est le cas pour les canalisations en polyéthylène bien adaptées pour la mise en œuvre de l'invention.

On peut également noter que le dispositif peut être introduit dans un manchon déjà existant et utilisé pour les dérivations. Ces manchons comprennent une conduite avec un filetage et ils sont soudés sur les canalisations.

Selon un mode particulier de réalisation, ladite face supérieure comporte un renfoncement adapté pour recevoir un outil de vissage et entraîner le vissage dudit dispositif.

Selon un mode particulier de réalisation, ladite face supérieure comporte au moins un connecteur électrique femelle relié électriquement à ladite au moins une connexion électrique.

Ainsi, le module électrique présent dans la canalisation peut ne comporter qu'une partie des éléments électroniques d'un dispositif plus complet, par exemple qu'un capteur en tant que module électronique.

Selon un mode particulier de réalisation, le dispositif comporte une entretoise pour espacer le module électronique dudit corps.

La longueur de cette entretoise sera choisie pour placer le module électronique en un point approprié de la canalisation, en fonction de l'application choisie.

Selon un mode particulier de réalisation, lesdites connexions électriques s'étendent au moins le long de et sur ladite entretoise.

Ceci permet de rendre plus robuste la connexion électrique.

Selon un mode particulier de réalisation, le dispositif comprend des parois maintenant ledit emporte-pièce espacé dudit corps, lesdites parois étant munies de fenêtres pour permettre le passage du fluide de ladite canalisation jusqu'audit module électronique lorsque le dispositif est dans sa position finale.

Selon un mode particulier de réalisation, dans lequel le module électronique est un capteur.

A titre indicatif, le capteur peut être un capteur mesurant un débit, un indice de méthane, une pression, une température, une énergie, ou encore un pouvoir calorifique supérieur ou inférieur.

Selon un mode particulier de réalisation, ledit capteur est un débitmètre, et ledit dispositif comporte un indicateur visible lors du vissage du dispositif pour placer le dispositif dans une direction définie par la canalisation (par exemple la direction axiale de la canalisation).

Selon un mode particulier de réalisation, le module électronique est un module de modification du flux ou de traitement du fluide..

L'invention permet ainsi de placer simplement des éléments de modifications de la section qui agissent sur le fluide tels que des ballons gonflables ou des diaphragmes. Alternativement, des modules de traitement tels que des filtres peuvent être actionnés.

On peut ainsi réguler ou interrompre un flux à distance si le dispositif électronique est équipé de moyens de communication sans fils.

Selon un mode particulier de réalisation, le dispositif comporte en outre un élément connectable à la face supérieure dudit corps configuré pour être connecté électriquement à ladite au moins une connexion électrique lorsque l'élément connectable est connecté à la face supérieure dudit corps,
l'élément connectable comportant au moins un module électronique supplémentaire choisi parmi le groupe comprenant : une source d'énergie électrique embarquée, un module de communication sans fil, un microcontrôleur, un interrupteur.

Par connectable, on entend que l'élément connectable peut être connecté et déconnecté.

On peut noter que dès lors que cet élément connectable comporte une source d'énergie embarquée et un module de communication sans fil, le dispositif peut fonctionner de manière autonome sans liaison filaire avec un autre dispositif.

La source d'énergie embarquée peut être une batterie ou une pile à combustible.

Aussi, l'utilisation d'un élément connectable comprenant la source d'énergie embarquée permet d'alimenter le module électronique qu'une fois que le module électronique a été mis en place dans sa position finale : ceci réduit les risques liés à l'introduction d'un appareil électronique dans une canalisation comprenant du gaz. L'utilisation d'une source d'énergie embarquée permet également de s'affranchir du besoin d'une alimentation électrique filaire.

Par ailleurs, l'utilisation d'une source d'énergie embarquée dans l'élément connectable permet de faciliter le remplacement de la source d'énergie électrique embarquée sans besoin de déplacer le reste du dispositif qui est positionné dans la position finale.

L'utilisation d'un interrupteur permet de davantage sécuriser l'installation du dispositif.

Selon un mode particulier de réalisation, ladite face supérieure comporte au moins un connecteur électrique femelle relié électriquement à ladite au moins une connexion électrique, et l'élément connectable est enfichable dans ledit au moins un connecteur électrique femelle.

Selon un mode particulier de réalisation, le manchon comporte une portion de raccord agencée autour d'une ouverture de la conduite du manchon destinée à déboucher sur la canalisation, la portion de raccord étant configurée pour être assemblée à la canalisation par soudage pour former un raccord étanche autour de ladite ouverture.

Ce soudage peut être un soudage électrique, tel qu'un soudage électrique utilisé par l'homme du métier pour assembler des manchons de dérivation. Cela implique que la portion de raccord comporte une résistance chauffante dans laquelle on fait circuler un courant pour faire fusionner le matériau de la portion de raccord avec celui de la canalisation (la portion de raccord et la canalisation étant préférentiellement composées du même matériau).

Selon un mode particulier de réalisation, le système comprend en outre un sas étanche assemblable sur ledit manchon par vissage, le sas étanche comprenant une vanne à passage intégral, une ouverture pour le passage de manière étanche d'un outil dans le sas pour atteindre ledit dispositif dans le manchon et visser ou dévisser ledit dispositif et le déplacer dans le sas (l'ouverture pouvant être formée dans une conduite de sas agencée dans le sas),
le sas étant configuré pour permettre le passage de part et d'autre de la vanne à passage intégral dudit dispositif.

Ainsi, on peut utiliser ce sas pour :
- augmenter l'étanchéité lors du vissage et du perçage de la canalisation. L'étanchéité sera alors obtenue par le dispositif électronique vissé dans le manchon et par le sas étanche,
- retirer un dispositif déjà en position finale,
- insérer un dispositif dans une canalisation ayant déjà été percée.

La vanne à passage intégral sera ouverte pour laisser passer l'outil et le dispositif, et elle sera fermée pour assurer l'étanchéité lorsqu'il n'y a plus de dispositif et que la canalisation a été percée par l'emporte-pièce.

L'invention propose également un procédé d'installation d'un système tel que défini ci-avant, dans lequel ledit dispositif électronique est agencé dans un manchon assemblé à une canalisation et à travers une conduite du manchon débouchant sur la canalisation,
le procédé comprenant un vissage du dispositif pour déplacer le dispositif dans la conduite du manchon jusqu'à ladite position finale, ledit emporte-pièce formant, au cours du vissage, un orifice traversant dans la canalisation pour permettre l'insertion du dispositif électronique dans la canalisation.

Selon un mode particulier de mise en œuvre, le dispositif comporte en outre un élément connectable à la face supérieure dudit corps configuré pour être connecté électriquement à ladite au moins une connexion électrique lorsque l'élément connectable est connecté à la face supérieure dudit corps,
l'élément connectable comportant au moins un module électronique supplémentaire choisi parmi le groupe comprenant : une source d'énergie électrique embarquée, un module de communication sans fil, un microcontrôleur, un interrupteur,
le procédé comportant en outre une étape postérieure audit vissage du dispositif dans laquelle on connecte l'élément connectable à la face supérieure du corps.

En d'autres termes, l'élément connectable n'est pas connecté pendant le vissage du dispositif.

Selon un mode particulier de mise en œuvre, le procédé comprend en outre une étape postérieure de fixation d'un bouchon sur l'ouverture de la conduite opposée à celle débouchant sur la canalisation.

Ce bouchon peut faire partie d'un système comprenant le dispositif et le manchon.

Le bouchon peut comporter un joint d'étanchéité. Ce joint d'étanchéité permet d'obtenir une deuxième barrière étanche pour éviter tout relâchement de gaz vers l'extérieur. Ce joint peut être un joint torique.

Selon un mode particulier de mise en œuvre, le procédé comprend l'assemblage d'un sas étanche sur ledit manchon par vissage, le sas étanche comprenant une vanne à passage intégral, une ouverture pour le passage de manière étanche d'un outil dans le sas pour atteindre ledit dispositif dans le manchon,
le sas étant configuré pour permettre le passage de part et d'autre de la vanne à passage intégral dudit dispositif,
ledit procédé comportant en outre une étape de vissage du dispositif dans le manchon au moyen dudit outil passant dans le sas,
ou
une étape de dévissage du dispositif en position finale au moyen dudit outil passant dans le sas.

Selon un mode particulier de mise en œuvre, comprenant ladite étape de dévissage, le procédé comprend en outre une étape dans laquelle on déplace ledit dispositif de l'autre côté de la vanne à passage intégral, et l'on ferme ladite vanne,
ou
le procédé comprenant ladite étape de vissage, le procédé comprend une étape préalable dans laquelle on ouvre ladite vanne et l'on déplace le dispositif jusqu'au manchon.

Selon un mode particulier de mise en œuvre, le procédé comprend en outre, après ladite étape de dévissage, une insertion ultérieure d'un deuxième dispositif électronique tel que défini ci-avant dans laquelle on place ledit deuxième dispositif électronique dans ledit sas étanche, on ouvre la vanne à passage intégral, on déplace ledit deuxième dispositif électronique jusqu'au manchon et l'on visse ledit deuxième dispositif.

En d'autres termes, ce mode de mise en œuvre prévoit le remplacement du dispositif, par exemple si une source d'énergie embarquée du dispositif est épuisée, ou si le dispositif est défaillant.

On peut noter que le procédé peut comporter une étape préalable d'assemblage dudit manchon sur une canalisation.

### Brève description des dessins

D'autres caractéristiques et avantages de la présente invention ressortiront de la description faite ci-dessous, en référence aux dessins annexés qui en illustrent un exemple dépourvu de tout caractère limitatif.

Sur les figures :
- la figure 1 représente de façon schématique un dispositif selon un mode de réalisation de l'invention,
- la figure 2 représente un système comportant le dispositif de la figure 1 et un manchon,
- les figures 3A et 3B sont des vues en perspective d'un dispositif selon un mode de réalisation de l'invention,
- la figure 4 représente un dispositif inséré dans une canalisation,
- les figures 5A, 5B, 5C, et 5D représentent différentes étapes de l'insertion d'un dispositif dans une canalisation,
- les figures 6A et 6B représentent l'utilisation d'un dispositif selon un mode de réalisation de l'invention capable de modifier la section disponible d'une canalisation,
- les figures 7A, 7B, 7C, 7D et 7E représentent différentes étapes de l'insertion d'un dispositif dans une canalisation en utilisant un sas, et
- les figures 8A, 8B, 8C, 8D, et 8E représentent différentes étapes du retrait d'un dispositif déjà inséré dans une canalisation.

### Description détaillée d'un mode de réalisation

Nous allons maintenant décrire un dispositif électronique destiné à être inséré dans une canalisation.

Dans les exemples qui suivent, les canalisations visées sont des canalisations en polyéthylène dans lesquelles circulent du gaz naturel. L'invention n'est néanmoins pas limitée à ces canalisations.

Sur les figures annexées, les mêmes références désignent les mêmes éléments.

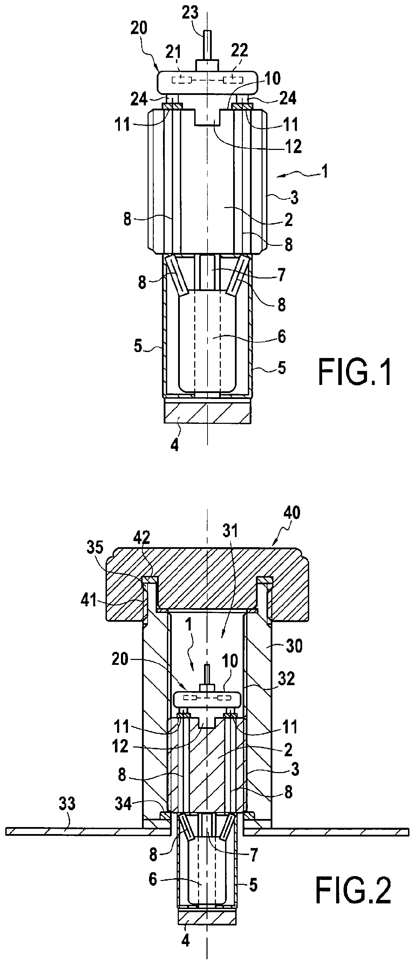

Sur la figure 1, on a représenté par une vue en coupe un dispositif 1 destiné à être inséré dans une canalisation en polyéthylène.

Ce dispositif 1 comprend un corps 2 en métal, par exemple en laiton (alternativement, des matériaux céramique peuvent être utilisés.. Le corps est muni sur ses parois latérales d'une portion filetée 3, qui est destinée à coopérer avec une portion filetée d'une conduite d'un manchon pour déplacer le dispositif.

Pour pénétrer à l'intérieur d'une canalisation, le dispositif comprend un emporte-pièce 4 éventuellement formé du même métal que le corps 2, et l'emporte-pièce 4 est espacé du corps par des parois 5. L'emporte-pièce a sensiblement les mêmes dimensions que le reste du dispositif pour pouvoir former un orifice qui laissera passer le dispositif.

Le dispositif comprend un module électronique 6, ici un débitmètre, et ce module électronique 6 est agencé entre l'emporte-pièce 4 et le corps 2. Pour placer le module électronique 6 plus à l'intérieur de la canalisation, une entretoise 7 est placée entre le corps 2 et le module électronique 6. Cette entretoise 2 maintient le module électronique.

Le module électronique 6 étant un capteur, d'autres éléments électroniques sont nécessaires pour le faire fonctionner. A cet effet, deux connexions électriques 8 ont été agencées pour connecter le module électronique 6 à d'autres éléments électroniques. Les connexions électroniques 8 s'étendent du module électronique jusqu'au corps, et elles sont noyées dans le corps 2 pour déboucher sur la face supérieure 10 du corps 2 (la face supérieure étant à l'opposé du module électronique 6 et de l'emporte-pièce 4 par rapport au corps 2).

Les connexions électriques 8 étant noyées dans le corps 2, le corps et les connexions électriques forment un élément plein pouvant agir comme un bouchon d'une conduite munie de filetages pour coopérer avec les portions filetées 3 du dispositif. Plus précisément, les connexions électriques 8 débouchent sur des connexions électriques femelles 11 au niveau de la face supérieure 10 du corps 2.

Pour déplacer le dispositif 1 dans une conduite, un renfoncement 12 adapté pour recevoir un outil de vissage et entrainer le vissage du dispositif a été aménagé au sein de la face supérieure 10 du corps 2.

Sur la figure 1, on a représenté le dispositif électronique 1 muni d'un élément connectable 20. Cet élément connectable 20 comporte ici une batterie 21 et un module de communication sans fil 22. Pour déclencher la mise en marche du dispositif 1, un interrupteur 23 est agencé sur l'élément connectable 20. Cet élément connectable 20 se connecte à la face supérieure du corps 2 en enfichant des connexions électriques 24 de l'élément connectables avec les connexions électriques 11 débouchant sur la face supérieure 10.

On peut noter que le module de communication sans fil 22 peut utiliser tout protocole connu pour faire remonter des informations récupérées par le module électronique 6. A titre indicatif, le module de communication sans fil peut permettre d'intégrer le dispositif à un réseau de communication cellulaire.

Les différents composants de l'élément connectable 20 peuvent être agencés au sein d'une même carte de circuit imprimé.

Des joints élastiques peuvent être placés autour des connexions électriques, comme représenté sur la figure.

Comme on le conçoit au vu de la figure 1, lors du vissage du dispositif, le renfoncement 12 doit être accessible. A cet effet l'élément connectable 20 n'est pas connecté pendant le vissage mais seulement une fois que le reste du dispositif a atteint sa position finale.

Sur la figure 2, on a représenté un système comprenant un dispositif 1 décrit en référence à la figure 1 et un manchon 30.

Le manchon 30 comporte une conduite 31 dans laquelle est agencé le dispositif 1. Sur la figure 1, on a représenté le dispositif 1 avec l'élément connectable 20, et on l'a également représenté dans une position correspondant à celle dans laquelle le dispositif sera quand il sera inséré dans une canalisation. En fait, le dispositif 1 peut se déplacer en translation dans la conduite 31. Ce déplacement est obtenu au moyen d'une portion filetée 32 de la conduite 31, lorsqu'un couple est appliqué par un outil dans le renfoncement 12.

Le manchon 30 comporte une portion de raccord 33 s'étendant radialement par rapport à l'axe de la conduite 31 (représenté en trait mixte). Cette portion de raccord est destinée à être assemblée à une canalisation. Les canalisations étant généralement cylindriques de section circulaire, la portion de raccord 33 peut s'étendre également dans la direction axiale de la conduite 31 pour épouser la forme de la canalisation.

Dans une alternative non représentée ici, le manchon 30 comporte une autre pièce appelée selle placée en regard de la portion de raccord 33 et destinée à entourer la canalisation pour rejoindre la portion de de raccord 33, comme cela est classique pour les manchons de dérivations connus selon la technique antérieure. En outre, la pièce de raccord 33 peut comporter une résistance chauffante dans laquelle on peut faire circuler un courant pour obtenir une fusion de la portion de raccord avec une canalisation : ceci permet d'obtenir une ouverture de la conduite 31 fermée de manière étanche par la paroi de la canalisation sur laquelle elle débouche et par la fusion de la portion de raccord 33 avec la paroi de la conduite.

Comme indiqué ci-avant, le dispositif 1 est ici placé dans sa position finale, avec le corps 2 et les connexions 8 formant un bouchon de la conduite 21, puisque les portions filetées 3 et 32 coopèrent. Pour améliorer l'étanchéité, un joint 34 est placé au niveau de l'ouverture de la conduite 31 de sorte que la portion filetée 3 se retrouve contre le joint quand le dispositif est dans sa position finale.

Pour améliorer davantage l'étanchéité, le système comporte un bouchon 40 placé de manière à boucher l'ouverture de la conduite opposée à celle qui sera placée contre la paroi de la conduite. Ce bouchon 40 comporte une portion filetée configurée pour coopérer avec une portion filetée 35 placée à l'extérieure du manchon. Le bouchon 40 comporte en outre un joint 42.

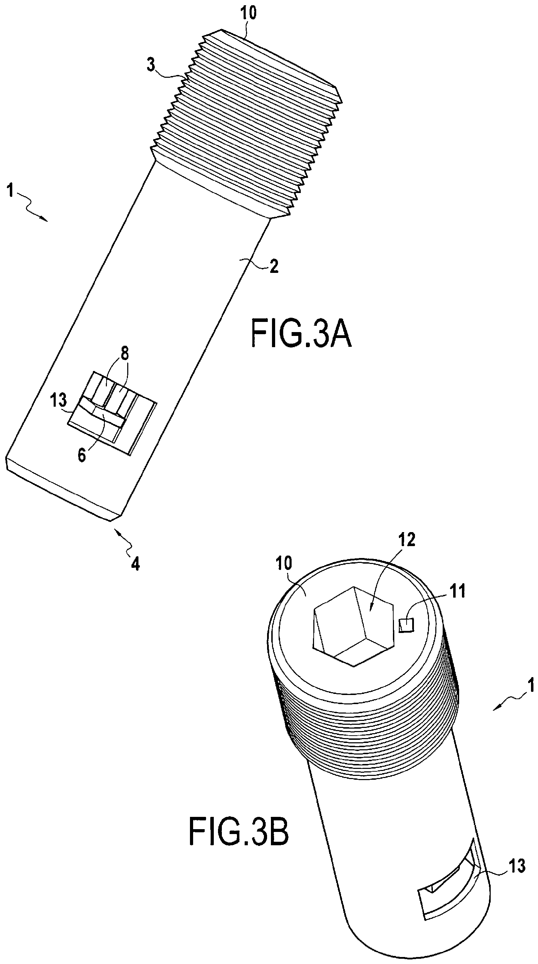

Sur la figure 3A, on a représenté en perspective un dispositif 1 sans élément connectable. Comme on peut le voir sur cette figure, le dispositif 1 a une forme quasi cylindrique de section circulaire.

Le dispositif 1 comporte des fenêtres 13 formées dans les parois 5 qui séparent le corps 2 de l'emporte-pièce 4. Les fenêtres 13 permettent au fluide qui circule dans la canalisation d'atteindre le module électronique 6. On peut noter que lorsque l'emporte-pièce 4 forme un orifice dans une paroi d'une canalisation, une partie découpée 51 (ou coupon) reste dans l'emporte-pièce 4, c'est notamment pour cette raison que les fenêtres 13 sont formées. Les fenêtres 13 permettent également de limiter l'impact de l'insertion du dispositif dans la canalisation sur le flux du fluide qui y circule.

Dans l'exemple de cette figure, il n'y a pas d'entretoise mais les connexions électriques 8 maintiennent directement un module électronique 6. Ce module électronique 6 est dans une position sensiblement horizontale sur la figure : cet agencement, possible si le module électronique 6 peut fonctionner ainsi, permet de le positionner plus profondément dans la canalisation.

La figure 3B présente une autre vue en perspective ou le dispositif électronique 1 présente une face supérieure 10 comportant un renfoncement 12 en forme d'hexagone pour recevoir un outil de type clé Allen. La face supérieure 10 comporte également un connecteur femelle 11 pour une ou plusieurs connexions électriques traversant le corps 2.

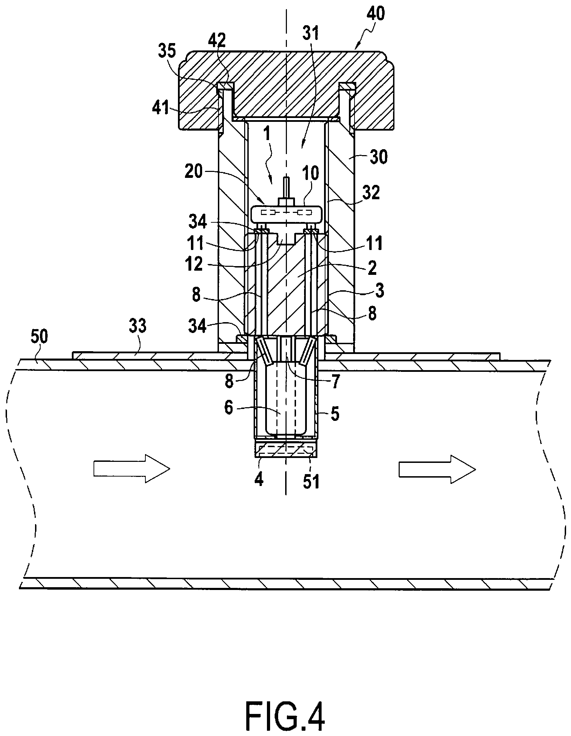

Sur la figure 4, on a représenté le système décrit en référence à la figure 2 assemblé sur une canalisation 50. La canalisation est une canalisation en polyéthylène ayant un diamètre qui peut être compris entre 200 millimètres et 400 millimètres, l'invention peut néanmoins être mise en œuvre sur des canalisations ayant d'autres diamètres. Comme on peut le constater sur cette figure, le dispositif 1 et le manchon 30 forment un système ayant une hauteur totale voisine du diamètre de la canalisation. L'invention peut donc être réalisée de manière peu encombrante, ce qui rend facile son installation en de nombreux points.

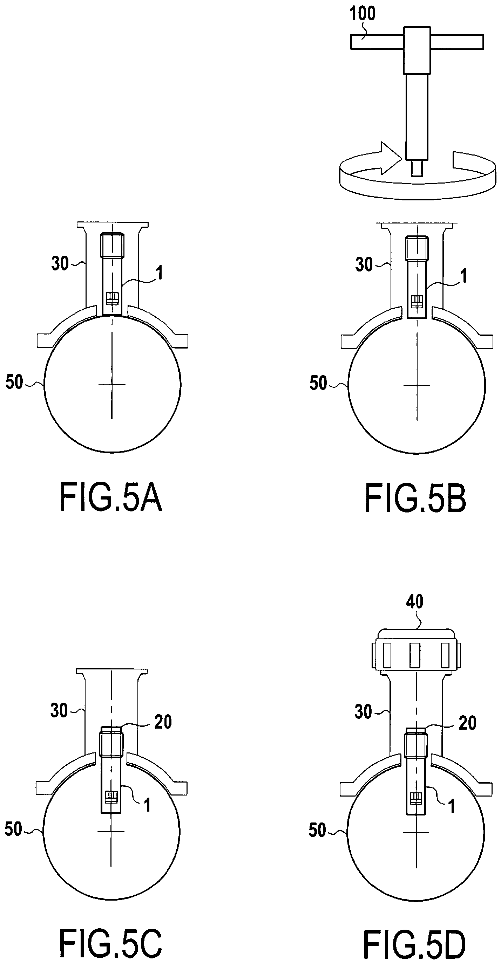

Les figures 5A à 5D montrent les différentes étapes de l'insertion d'un dispositif électronique 1 dans une canalisation 50. Ces figures sont des vues en coupe dans une direction perpendiculaire à celle des figures 1, 2, et 4.

Sur la figure 5A, le manchon 30 a été assemblé avec la canalisation 50 par soudage. A ce stade, le dispositif 1 est intégralement agencé dans le manchon 30, et il n'est pas muni de l'élément connectable.

Un outil 100 est ensuite utilisé pour visser le dispositif 1 qui perce un orifice dans la canalisation 50 (figure 5B). Le percement peut être réalisé alors qu'un gaz circule dans la canalisation, puisque le corps du dispositif traversé par les connexions électrique agit comme un bouchon dans le manchon 30.

Le vissage continue jusqu'à déplacer le dispositif 1 dans la canalisation 50 dans sa position finale, et l'on peut ensuite connecter l'élément connectable 20 au reste du dispositif 1 (figure 5C).

Ensuite, on peut mettre un bouchon 40 sur le manchon 30, comme illustré sur la figure 5D.

On peut noter qu'il est également possible d'utiliser un sas étanche supplémentaire pour installer ou retirer le dispositif alors qu'un fluide est en circulation dans la canalisation. Ceci peut permettre de remplacer un dispositif déjà installé.

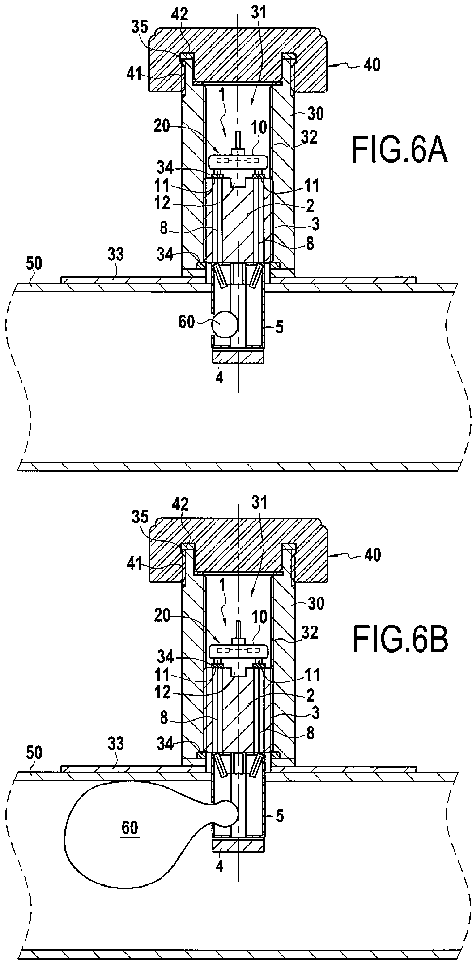

La figure 6A représente une variante de l'invention dans laquelle le module électronique 60 est un module de modification de la section de la canalisation comprenant un élément gonflable.

L'activation de ce module électronique 60 est représentée sur la figure 6B, où l'élément gonflable a été gonflé.

Le système représenté sur les figures 6A et 6B permet simplement et à distance de contrôler les flux dans un réseau de canalisations.

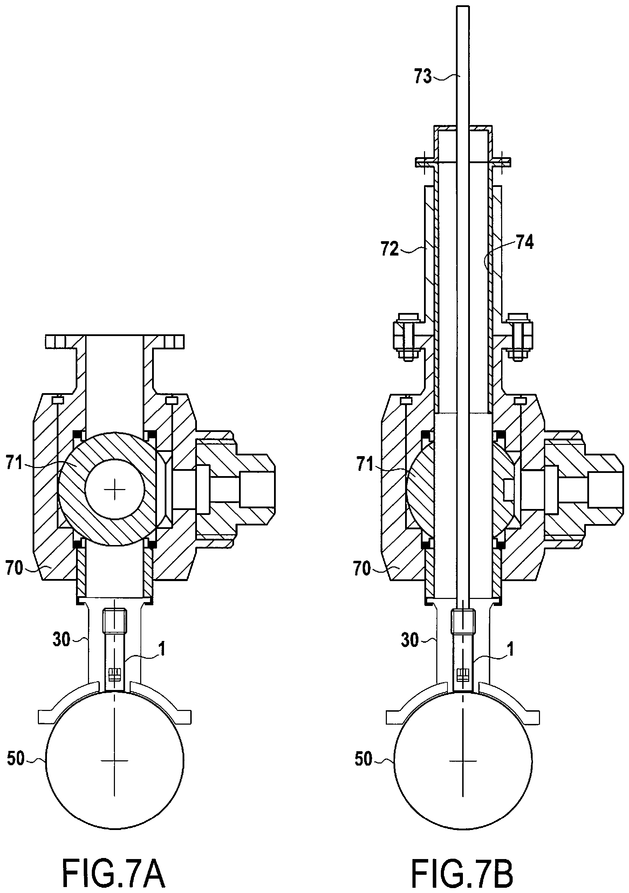

On va maintenant, en référence aux figures 7A à 7E, décrire les différentes étapes de l'insertion d'un dispositif dans une canalisation en utilisant un sas.

Sur la figure 7A, on a représenté un système analogue à celui décrit en référence à la figure 5A, mais dans lequel le système comprend en outre une première partie de sas 70 munie d'une vanne à passage intégral 71. La première partie de sas est vissée sur le manchon en lieu et place d'un bouchon tel que le bouchon 40 décrit en référence à la figure 5D.

Sur la figure 7B, on a représenté l'assemblage d'une deuxième partie de sas 72 sur la première partie de sas 70, les deux parties de sas 70 et 72 formant le sas avec une conduite de sas 74. Dans l'exemple de la figure 7B, la vanne à passage intégral 71 est dans une position ouverte ou passante, et un outil 73 a été inséré de manière étanche dans la conduite de sas 74 accueillie dans les parties de sas 70 et 72, et l'outil passe ainsi dans le sas.

L'outil 73 coopère avec le dispositif électronique et peut entrainer son vissage.

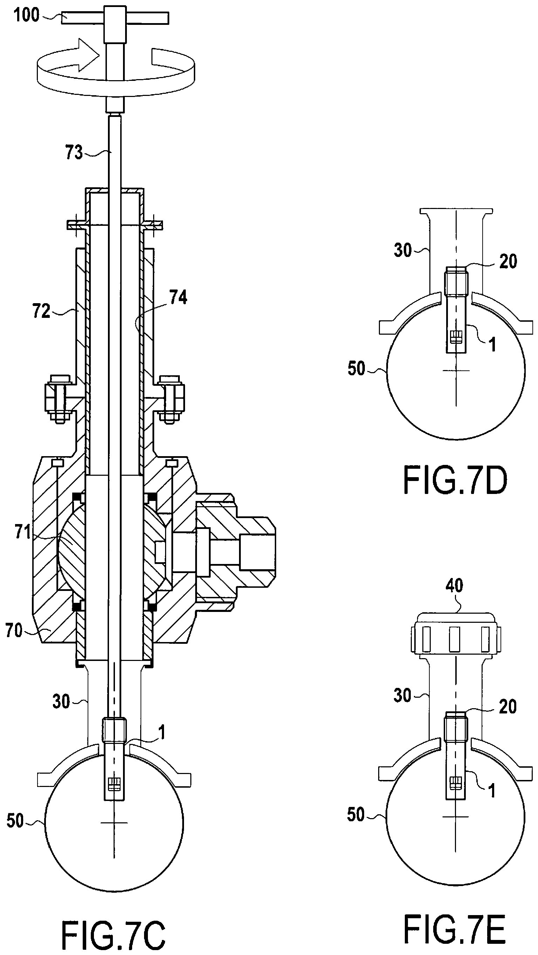

Un outil 100 peut être utilisé sur la partie de l'outil 73 qui est saillante de manière étanche de la deuxième partie de sas 72 (figure 7C). Cela entraine le vissage du dispositif 1 dans le manchon 30 et son insertion dans la canalisation 50. Le sas permet d'obtenir une bonne étanchéité lors de l'insertion du dispositif 1 dans la canalisation 50.

Sur la figure 7D, on a représenté le placement d'un élément connectable 20, et sur la figure 7E, on a représenté le placement d'un bouchon 40 sur le manchon 30. L'élément connectable 20 comporte au moins une source d'énergie électrique embarquée, un module de communication sans fil, un microcontrôleur, ou un interrupteur. Cet élément connectable 20 n'est connecté qu'après le percement de la canalisation.

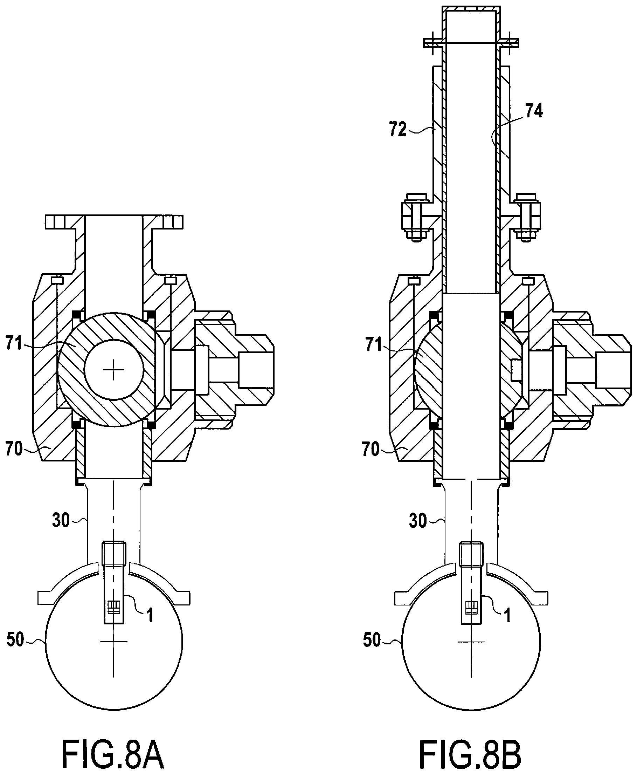

On va maintenant décrire, en référence aux figures 8A à 8E, le retrait d'un dispositif électronique en utilisant un sas.

Sur la figure 8A, on a représenté un dispositif 1 inséré dans une canalisation tel que le dispositif obtenu sur la figure 5D mais dans lequel l'élément connectable 20 a déjà été retiré. En lieu et place du bouchon de la figure 5D, une première partie de sas 70 est assemblée au manchon. La vanne à passage intégral 71 est initialement fermée.

Sur la figure 8B, on a représenté l'assemblage d'une deuxième partie de sas 72, et l'ouverture de la vanne à passage intégral 71.

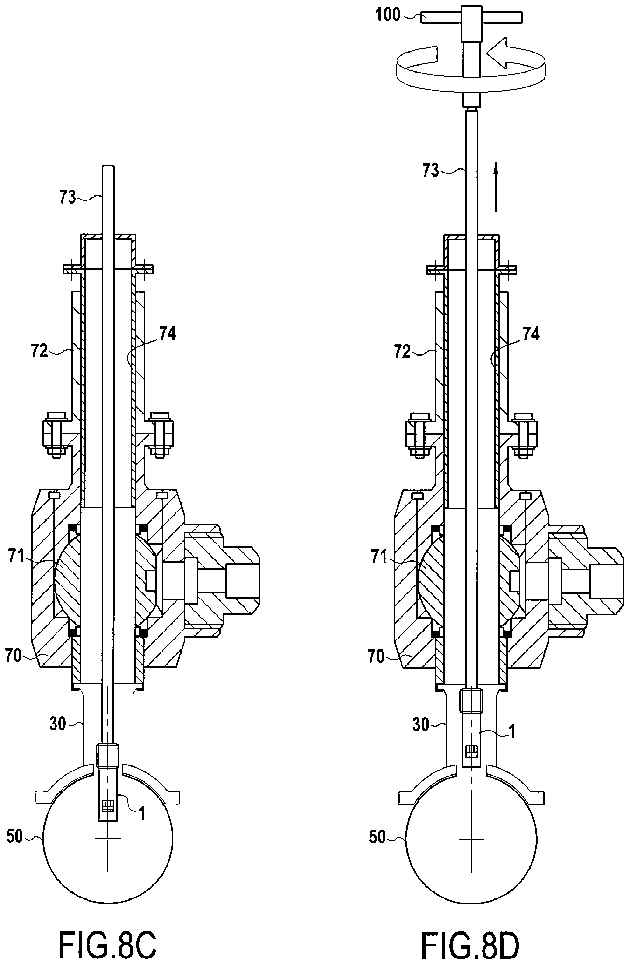

Sur la figure 8C, on a représenté l'insertion d'un outil 73 de manière étanche dans la conduite de sas 74 accueillie dans les première et deuxième parties de sas 70 et 72 jusqu'à atteindre le dispositif 1. On utilise également un outil 100 pour dévisser le dispositif 1.

Sur la figure 8D, on a représenté le dispositif 1 sorti de la canalisation ayant été percée.

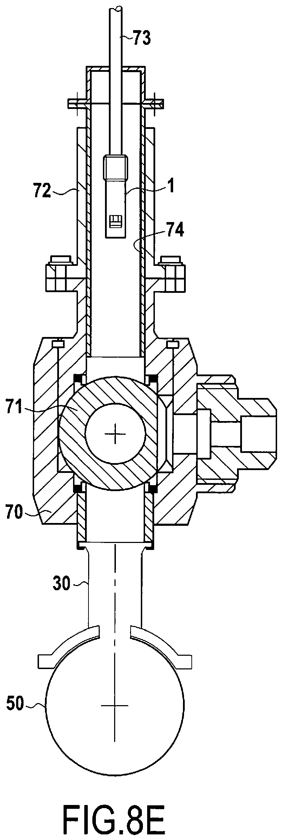

Le dispositif est ensuite déplacé dans la deuxième partie de sas 72 et la vanne à passage intégral 71 est fermée (figure 8E) : l'étanchéité est ainsi maintenue même si la deuxième partie de sas est désassemblée pour récupérer le dispositif 1.

Dans un mode de réalisation de l'invention, l'outil 73 est suffisamment serré dans le dispositif 1 (par exemple dans un renfoncement du dispositif 1) pour que le déplacement soit mis en œuvre de la manière suivante :
- le dispositif est dévissé et remonte dans le manchon 30,
- une fois sorti du manchon, c'est parce qu'il est serré dans le dispositif 1 que l'outil 73 permet de déplacer le dispositif 1 dans la canalisation en déplaçant l'outil 73.

Alternativement, le dispositif 1 comporte un renfoncement équipé d'un système de fixation à baïonnette pour fixer l'outil 73 au dispositif 1 (non représenté). Le déplacement est mis en œuvre ainsi :
- le dispositif est dévissé et remonté dans le manchon 30,
- une fois sorti du manchon, c'est au moyen de la fixation à baïonnette que le déplacement de l'outil 73 entraîne celui du dispositif qui remonte jusque dans la conduite de sas 74.

Cela peut permettre de retirer un dispositif dont la source d'énergie électrique embarquée est épuisée ou un dispositif défaillant.

On pourra également insérer un deuxième dispositif pour mettre en œuvre un remplacement, dans une canalisation ayant déjà été percée.

L'invention permet donc d'insérer simplement des dispositifs électroniques peu volumineux dans des canalisations, y compris lorsqu'un fluide circule dans la canalisation.

## Revendications

1. Système comprenant un dispositif électronique (1) destiné à être inséré dans une canalisation (50) jusqu'à une position finale, le dispositif étant en outre configuré pour être agencé, préalablement à ladite insertion dans ladite position finale, dans un manchon (30) assemblé à la canalisation et à travers une conduite (31) du manchon débouchant sur une paroi de la canalisation,
le dispositif comprenant :
• un corps (2) muni d'une portion filetée (3) destinée à coopérer avec une portion filetée (32) de la conduite du manchon pour déplacer le dispositif électronique par vissage jusqu'à sa position finale,
• un emporte-pièce (4) configuré pour former un orifice traversant dans la canalisation au cours dudit vissage et permettre l'insertion du dispositif électronique dans la canalisation jusqu'à sa position finale,
• un module électronique (6, 60) disposé entre l'emporte-pièce et ledit corps et destiné à être en contact avec un fluide traversant la canalisation dans ladite position finale,
• au moins une connexion électrique (8) connectée au module électronique et traversant ledit corps débouchant sur une face supérieure (10) du corps située à l'opposée dudit module électronique et dudit emporte-pièce par rapport audit corps,
le corps et ladite au moins une connexion électrique formant un bouchon de la conduite du manchon
**caractérisé en ce que** le système comporte en outre ledit manchon comprenant la conduite (31) dans laquelle le dispositif est agencé, la conduite comprenant la portion filetée (32) coopérant avec la portion filetée (3) du corps du dispositif.

2. Système selon la revendication 1, dans lequel ladite face supérieure (10) comporte un renfoncement adapté pour recevoir un outil de vissage (100) et entrainer le vissage dudit dispositif.

3. Système selon la revendication 1 ou 2, dans lequel ladite face supérieure (10) comporte au moins un connecteur électrique femelle (11) relié électriquement à ladite au moins une connexion électrique (8).

4. Système selon l'une quelconque des revendications 1 à 3, comportant une entretoise (7) pour espacer le module électronique dudit corps (2).

5. Système selon la revendication 4, dans lequel ladite au moins une connexion électrique (8) s'étend au moins le long de et sur ladite entretoise (7).

6. Système selon l'une quelconque des revendications 1 à 5, dans lequel le dispositif comprend des parois (5) maintenant ledit emporte-pièce espacé dudit corps, lesdites parois étant munies de fenêtres (13) pour permettre le passage du fluide de ladite canalisation jusqu'audit module électronique (6, 60) lorsque le dispositif est dans sa position finale.

7. Système selon l'une quelconque des revendications 1 à 6, dans lequel le module électronique (6) est un capteur.

8. Système selon la revendication 7, dans lequel ledit capteur est un débitmètre, ledit dispositif comportant un indicateur visible lors du vissage du dispositif pour placer le dispositif dans une direction définie par la canalisation.

9. Système selon l'une quelconque des revendications 1 à 6, dans lequel le module électronique (60) est un module de modification du flux ou de traitement du fluide.

10. Système selon l'une quelconque des revendications 1 à 9, dans lequel le dispositif comporte en outre un élément (20) connectable à la face supérieure dudit corps configuré pour être connecté électriquement à ladite au moins une connexion électrique lorsque l'élément connectable est connecté à la face supérieure dudit corps,
l'élément connectable comportant au moins un module électronique supplémentaire choisi parmi le groupe comprenant : une source d'énergie électrique embarquée (21), un module de communication sans fil (22), un microcontrôleur, un interrupteur (23).

11. Système selon la revendication 10 prise dans sa combinaison avec au moins la revendication 3, dans lequel l'élément connectable (20) est enfichable dans ledit au moins un connecteur électrique femelle (11).

12. Système selon la revendication 1, comprenant en outre un sas (70, 72) étanche assemblable sur ledit manchon par vissage, le sas étanche comprenant une vanne à passage intégral (71), une ouverture pour le passage de manière étanche d'un outil dans le sas pour atteindre ledit dispositif dans le manchon et visser ou dévisser ledit dispositif et le déplacer dans le sas,
le sas étant configuré pour permettre le passage de part et d'autre de la vanne à passage intégral dudit dispositif.

13. Procédé d'installation d'un système selon l'une quelconque des revendications 1 à 12, dans lequel ledit dispositif électronique est agencé dans le manchon (30) assemblé à une canalisation et à travers la conduite (31) du manchon débouchant sur la canalisation,
le procédé comprenant un vissage du dispositif pour déplacer le dispositif dans la conduite du manchon jusqu'à ladite position finale, ledit emporte-pièce (4) formant, au cours du vissage, un orifice traversant dans la canalisation pour permettre l'insertion du dispositif électronique dans la canalisation.

14. Procédé selon la revendication 13, dans lequel, le dispositif comporte en outre un élément (20) connectable à la face supérieure (10) dudit corps configuré pour être connecté électriquement à ladite au moins une connexion électrique (8) lorsque l'élément connectable est connecté à la face supérieure dudit corps,
l'élément connectable comportant au moins un module électronique supplémentaire choisi parmi le groupe comprenant : une source d'énergie électrique embarquée (21), un module de communication sans fil (22), un microcontrôleur, un interrupteur (23),
le procédé comportant en outre une étape postérieure audit vissage du dispositif dans laquelle on connecte l'élément connectable à la face supérieure du corps.

15. Procédé selon la revendication 13 ou 14, comprenant l'assemblage d'un sas étanche (70, 72) sur ledit manchon par vissage, le sas étanche comprenant une vanne à passage intégral (71), une ouverture pour le passage de manière étanche d'un outil dans le sas pour atteindre ledit dispositif dans le manchon,
le sas étant configuré pour permettre le passage de part et d'autre de la vanne à passage intégral dudit dispositif,
ledit procédé comportant en outre une étape de vissage du dispositif dans le manchon au moyen dudit outil passant dans le sas,
ou
une étape de dévissage du dispositif en position finale au moyen dudit outil passant dans le sas.

16. Procédé selon la revendication 15, comprenant ladite étape de dévissage, le procédé comprend en outre une étape dans laquelle on déplace ledit dispositif de l'autre côté de la vanne à passage intégral, et l'on ferme ladite vanne,
ou
le procédé comprenant ladite étape de vissage, le procédé comprend une étape préalable dans laquelle on ouvre ladite vanne et l'on déplace le dispositif jusqu'au manchon.

17. Procédé selon la revendication 16, comprenant en outre, après ladite étape de dévissage, une insertion ultérieure d'un deuxième dispositif électronique tel que mentionné dans l'une quelconque des revendications 1 à 12 dans laquelle on place ledit deuxième dispositif électronique dans ledit sas étanche, on ouvre la vanne à passage intégral, on déplace ledit deuxième dispositif électronique jusqu'au manchon et l'on visse ledit deuxième dispositif.

## Patentansprüche

1. System, umfassend eine elektronische Vorrichtung (1), die dazu bestimmt ist, in ein Rohr (50) bis zu einer Endposition eingeführt zu werden, wobei die Vorrichtung ferner dazu ausgelegt ist, vor dem genannten Einführen in die Endposition in einer Manschette (30), die an dem Rohr angebracht ist, und quer durch eine Leitung (31) der Manschette, die in eine Wand des Rohrs mündet, angeordnet zu werden,
wobei die Vorrichtung umfasst:
• einen Körper (2), welcher mit einem Gewindeabschnitt (3) versehen ist, der dazu bestimmt ist, mit einem Gewindeabschnitt (32) der Leitung der Manschette zusammenzuwirken, um die elektronische Vorrichtung durch Einschrauben bis in ihre Endposition zu bewegen,
• eine Stanzform (4), die dazu ausgelegt ist, eine Öffnung, die das Rohr durchquert, während des genannten Einschraubens zu bilden und das Einführen der elektronischen Vorrichtung in das Rohr bis in ihre Endposition zu gestatten,
• ein elektronisches Modul (6, 60), das zwischen der Stanzform und dem genannten Körper angeordnet ist und dazu bestimmt ist, mit einem Fluid, welches das Rohr durchquert, in der genannten Endposition in Kontakt zu gelangen,
• mindestens eine elektrische Verbindung (8), die mit dem elektronischen Modul verbunden ist und den genannten Körper durchquert, auf eine obere Fläche (10) des Körpers mündet und gegenüber dem genannten elektronischen Modul und der genannten Stanzform in Bezug auf den genannten Körper angeordnet ist,
wobei der Körper und die genannte mindestens eine elektronische Verbindung einen Verschluss der Leitung der Manschette bilden,
**dadurch gekennzeichnet, dass** das System außerdem die genannte Manschette umfasst, umfassend die Leitung (31), in der die Vorrichtung angeordnet ist, wobei die Leitung den Gewindeabschnitt (32) umfasst, der mit dem Gewindeabschnitt (3) des Körpers der Vorrichtung zusammenwirkt.

2. System nach Anspruch 1, wobei die genannte obere Fläche (10) eine Verstärkung umfasst, die dazu geeignet ist, ein Schraubwerkzeug (100) aufzunehmen und das Einschrauben der genannten Vorrichtung zu bewirken.

3. System nach Anspruch 1 oder 2, wobei die genannte obere Fläche (10) mindestens einen weiblichen elektrischen Verbinder (11) umfasst, der elektrisch mit der genannten mindestens einen elektrischen Verbindung (8) verbunden ist.

4. System nach einem der Ansprüche 1 bis 3, umfassend einen Abstandshalter (7), um das elektronische Modul von dem genannten Körper (2) zu beabstanden.

5. System nach Anspruch 4, wobei sich die genannte mindestens eine elektrische Verbindung (8) mindestens entlang und auf dem genannten Abstandshalter (7) erstreckt.

6. System nach einem der Ansprüche 1 bis 5, wobei die Vorrichtung Wände (5) umfasst, die den genannten Abstandshalter halten, der von dem genannten Körper beabstandet ist, wobei die genannten Wände mit Fenstern (13) versehen sind, um das Hindurchgehen des Fluids des genannten Rohrs bis zu dem genannten elektronischen Modul (6, 60) zu gestatten, wenn sich die Vorrichtung in ihrer Endposition befindet.

7. System nach einem der Ansprüche 1 bis 6, wobei das elektronische Modul (6) ein Sensor ist.

8. System nach Anspruch 7, wobei der genannte Sensor ein Durchflussmesser ist, wobei die genannte Vorrichtung einen Indikator umfasst, der beim Einschrauben der Vorrichtung sichtbar ist, um die Vorrichtung in eine von dem Rohr definierte Richtung zu platzieren.

9. System nach einem der Ansprüche 1 bis 6, wobei das elektronische Modul (60) ein Modul zur Modifikation des Durchflusses oder zur Behandlung des Fluids ist.

10. System nach einem der Ansprüche 1 bis 9, wobei die Vorrichtung außerdem ein Element (20) umfasst, das mit der oberen Fläche des genannten Körpers verbindbar ist und das dazu ausgelegt ist, elektrisch mit der genannten mindestens einen elektrischen Verbindung verbunden zu werden, wenn das verbindbare Element mit der oberen Fläche des genannten Körpers verbunden ist,
wobei das verbindbare Elemente mindestens ein ergänzendes elektronisches Modul umfasst, das ausgewählt ist aus der Gruppe umfassend: eine eingebaute elektrische Energiequelle (21), ein drahtloses Kommunikationsmodul (22), eine Mikrosteuereinheit, einen Unterbrecher (23).

11. System nach Anspruch 10, in Kombination mit mindestens Anspruch 3, wobei das verbindbare Element (20) in den genannten mindestens einen weiblichen elektrischen Verbinder (11) einsetzbar ist.

12. System nach Anspruch 1, außerdem umfassend eine Schleuse (70, 72), die an der genannten Manschette durch Aufschrauben angebracht werden kann, wobei die dichte Schleuse ein Ventil mit vollem Durchgang (71) und eine Öffnung für das dichte Hindurchgehen eines Werkzeugs in die Schleuse umfasst, um die genannte Vorrichtung in der Manschette zu erreichen und die genannte Vorrichtung aufzuschrauben oder abzuschrauben und sie in der Schleuse zu bewegen,
wobei die Schleuse dazu ausgelegt ist, den Durchgang auf beiden Seiten des Ventils mit vollem Durchgang der genannten Vorrichtung zu gestatten.

13. Vorrichtung zur Installation eines Systems nach einem der Ansprüche 1 bis 12, wobei die genannte elektronische Vorrichtung in der Manschette (30), die an dem Rohr angebracht ist, und quer durch die Leitung (31) der Manschette angeordnet ist, die in das Rohr mündet,
wobei das Verfahren ein Einschrauben der Vorrichtung umfasst, um die Vorrichtung in der Leitung der Manschette bis in die genannte Endposition zu bewegen, wobei die genannte Stanzform (4), während des Einschraubens, eine Öffnung bildet, die das Rohr durchquert, um das Einführen der elektronischen Vorrichtung in das Rohr zu gestatten.

14. Verfahren nach Anspruch 13, wobei die Vorrichtung außerdem ein Element (20) umfasst, das mit der oberen Fläche (10) des genannten Körpers verbindbar ist und das dazu ausgelegt ist, elektrisch mit der genannten mindestens einen elektrischen Verbindung (8) verbunden zu werden, wenn das verbindbare Element mit der oberen Fläche des genannten Körpers verbunden ist,
wobei das verbindbare Elemente mindestens ein ergänzendes elektronisches Modul umfasst, das ausgewählt wird aus der Gruppe umfassend: eine eingebaute elektrische Energiequelle (21), ein drahtloses Kommunikationsmodul (22), eine Mikrosteuereinheit, einen Unterbrecher (23),
wobei das Verfahren außerdem einen Schritt nach dem genannten Einschrauben der Vorrichtung umfasst, in dem das verbindbare Elemente mit der oberen Fläche des Körpers verbunden wird.

15. Verfahren nach Anspruch 13 oder 14, umfassend das Anbringen einer dichten Schleuse (70, 72) an der genannten Manschette durch Aufschrauben, wobei die dichte Schleuse ein Ventil mit vollem Durchgang (71) und eine Öffnung für das dichte Hindurchgehen eines Werkzeugs in die Schleuse umfasst, um die genannte Vorrichtung in der Manschette zu erreichen,
wobei die Schleuse dazu ausgelegt ist, das Hindurchgehen auf beiden Seiten des Ventils mit vollem Durchgang der genannten Vorrichtung zu gestatten,
wobei das genannte Verfahren außerdem einen Schritt des Einschraubens der Vorrichtung in die Manschette mit Hilfe des genannten Werkzeugs umfasst, das in die Schleuse eindringt,
oder
einen Schritt des Abschraubens der Vorrichtung in der Endposition mit Hilfe des Werkzeugs, das in die Schleuse eindringt.

16. Verfahren nach Anspruch 15, umfassend den genannten Schritt des Abschraubens, wobei das Verfahren außerdem einen Schritt umfasst, in dem die Vorrichtung von der anderen Seite des Ventils mit vollem Durchgang verschoben wird und das genannte Ventil geschlossen wird,
oder
das Verfahren den genannten Schritt des Einschraubens umfasst, wobei das Verfahren einen vorhergehenden Schritt umfasst, in dem das genannte Ventil geöffnet wird und die Vorrichtung bis zur Manschette bewegt wird.

17. Verfahren nach Anspruch 16, außerdem umfassend, nach dem genannten Schritt des Abschraubens, ein nachfolgendes Einführen einer zweiten elektronischen Vorrichtung, wie in einem der Ansprüche 1 bis 12 angegeben, wobei die genannte zweite elektronische Vorrichtung in die genannte dichte Schleuse platziert wird, das Ventil mit vollem Durchgang geöffnet wird, die genannte zweite elektronische Vorrichtung bis zur Manschette bewegt wird, und die genannte zweite Vorrichtung eingeschraubt wird.

## Claims

1. A system comprising an electronic device (1) intended to be inserted into a pipe (50) up to a final position, the device being further configured to be arranged, prior to said insertion into said final position, in a sleeve (30) assembled to the pipe and through a duct (31) of the sleeve opening out onto a wall of the pipe,
the device comprising:
• a body (2) provided with a threaded portion (3) intended to cooperate with a threaded portion (32) of the duct of the sleeve to move the electronic device by screwing up to its final position,
• a punch (4) configured to form a through hole in the pipe during said screwing and allow the insertion of the electronic device into the pipe up to its final position,
• an electronic module (6, 60) disposed between the punch and said body and intended to be in contact with a fluid passing through the pipe in said final position,
• at least one electrical connection (8) connected to the electronic module and passing through said body opening out onto an upper face (10) of the body located opposite said electronic module and said punch relative to said body,
the body and said at least one electrical connection forming a plug of the duct of the sleeve
**characterized in that** the system further includes said sleeve comprising the duct (31) in which the device is arranged, the duct comprising the threaded portion (32) cooperating with the threaded portion (3) of the body of the device.

2. The system according to claim 1, wherein said upper face (10) includes a recess adapted to receive a screwing tool (100) and to cause the screwing of said device.

3. The system according to claim 1 or 2, wherein said upper face (10) includes at least one female electrical connector (11) electrically connected to said at least one electrical connection (8).

4. The system according to any one of claims 1 to 3, including a spacer (7) to space the electronic module from said body (2).

5. The system according to claim 4, wherein said at least one electrical connection (8) extends at least along and over said spacer (7).

6. The system according to any one of claims 1 to 5, wherein the device comprises walls (5) maintaining said punch spaced from said body, said walls being provided with windows (13) to allow the passage of the fluid from said pipe to said electronic module (6, 60) when the device is in its final position.

7. The system according to any one of claims 1 to 6, wherein the electronic module (6) is a sensor.

8. The system according to claim 7, wherein said sensor is a flowmeter, said device including an indicator visible during screwing of the device to place the device in a direction defined by the pipe.

9. The system according to any one of claims 1 to 6, wherein the electronic module (60) is a flow modification or fluid treatment module.

10. The system according to any one of claims 1 to 9, wherein the device further includes an element (20) connectable to the upper face of said body configured to be electrically connected to said at least one electrical connection when the connectable element is connected to the upper face of said body,
the connectable element including at least one additional electronic module chosen from the group comprising: an on-board electrical energy source (21), a wireless communication module (22), a microcontroller, a switch (23).

11. The system according to claim 10, taken in combination with at least claim 3, wherein the connectable element (20) is pluggable into said at least one female electrical connector (11).

12. The system according to claim 1, further comprising a sealed airlock (70, 72) that can be assembled on said sleeve by screwing, the sealed airlock comprising a full-flow valve (71), an opening for the passage in a sealed manner of a tool in the airlock to reach said device in the sleeve and screw or unscrew said device and move it in the airlock,
the airlock being configured to allow passage on either side of the full-flow valve of said device.

13. A method for installing a system according to any one of claims 1 to 12, wherein said electronic device is arranged in the sleeve (30) assembled to a pipe and through the duct (31) of the sleeve opening out onto the pipe,
the method comprising a screwing of the device to move the device in the duct of the sleeve up to said final position, said punch (4) forming, during the screwing, a through hole in the pipe to allow the insertion of the electronic device in the pipe.

14. The method according to claim 13, wherein, the device further includes an element (20) connectable to the upper face (10) of said body configured to be electrically connected to said at least one electrical connection (8) when the connectable element is connected to the upper face of said body,
the connectable element including at least one additional electronic module chosen from the group comprising: an on-board electrical energy source (21), a wireless communication module (22), a microcontroller, a switch (23),
the method further including a step subsequent to said screwing of the device in which the connectable element is connected to the upper face of the body.

15. The method according to claim 13 or 14, comprising the assembling of a sealed airlock (70, 72) on said sleeve by screwing, the sealed airlock comprising a full-flow valve (71), an opening for the passage in a sealed manner of a tool in the airlock to reach said device in the sleeve,
the airlock being configured to allow the passage on either side of the full-flow valve of said device,
said method further including a step of screwing the device into the sleeve by means of said tool passing through the airlock,
or
a step of unscrewing the device in the final position by means of said tool passing through the airlock.

16. The method according to claim 15, comprising said unscrewing step, the method further comprises a step in which said device is moved to the other side of the full-flow valve, and said valve is closed,
or
the method comprising said screwing step, the method comprises a preliminary step in which said valve is opened and the device is moved up to the sleeve.

17. The method according to claim 16, further comprising, after said unscrewing step, a subsequent insertion of a second electronic device as mentioned in any one of claims 1 to 12 wherein said second electronic device is placed in said sealed airlock, the full-flow valve is opened, said second electronic device is moved up to the sleeve and said second device is screwed.
